# EUROPÄISCHE PATENTSCHRIFT

(11) **EP 0 662 282 B1**
(45) Veröffentlichungstag und Bekanntmachung des Hinweises auf die Patenterteilung: **21.07.1999**
(21) Anmeldenummer: 94100209.9
(22) Anmeldetag: 08.01.1994
(51) Int. Cl.: A01L 7/02

(54) **Hufbeschlag**
Horseshoe
Ferrure des sabots de cheval

(43) Veröffentlichungstag der Anmeldung: 12.07.1995
(73) Patentinhaber: Precotec AG, 6300 Zug (CH)
(72) Erfinder: Inglin, Gerhard, 8902 Urdorf (CH)
(74) Vertreter: Patentanwälte Schaad, Balass, Menzl & Partner AG

(56) Entgegenhaltungen:
- EP-A- 0 280 656
- WO-A-86/05655
- FR-A- 2 459 614
- FR-A- 2 512 640
- GB-A- 230 939

## Beschreibung

Die vorliegende Erfindung betrifft einen Hufbeschlag, der die Merkmale im Oberbegriff des Anspruchs 1 aufweist.

Ein Hufbeschlag dieser Art ist aus WO 83/03949 bekannt. Er weist ein aus Metall durch Ziehen hergestelltes Basisteil auf, das einen durch eine Bodenwand, eine innere Seitenwand und eine äussere Seitenwand begrenzten Kanal bildet. In der Bodenwand sind Nagellöcher ausgenommen, um das Basisteil mittels Hufnägeln am Huf zu befestigen. An den Seitenwänden sind entlang ihrem unteren, von der Bodenwand entfernten Rand, mehrere Haken angeformt, die voneinander beabstandet sind und in den Kanal vorstehen. Weiter weist der Hufbeschlag eine auswechselbare Sohle aus elastischem Material auf, an der ein Rückenwulst angeformt ist, der dazu bestimmt ist, in den Kanal eingesetzt zu werden. Der Rückenwulst weist seitliche Befestigungsausnehmungen auf, in die bei in das Basisteil eingesetzter Sohle die Haken des Basisteils eingreifen, um die Sohle an diesem festzuhalten. Ein Warm-Aufrichten des Basisteils ist nicht oder nur mit Schwierigkeiten verbunden. Dabei würden die Seitenwände des im Querschnitt U-förmigen, dünnwandigen Basisteils nach einwärts bzw. auswärts klappen. Es sind somit eine Vielzahl unterschiedlicher Basisteile für die verschieden grossen Hufe und verschiedenen Hufformen notwendig. Weiter ist das Basisteil nicht geeignet für die Herstellung von Spezialbeschlägen, um den Hufbeschlag an besondere Bedingungen und Wünsche anzupassen.

Es ist deshalb eine Aufgabe der vorliegenden Erfindung, einen gattungsgemässen Hufbeschlag zu schaffen, dessen Basisteil problemlos warm-aufrichtbar und auch zur Herstellung von Spezialbeschlägen geeignet ist.

Diese Aufgabe wird durch einen gattungsgemässen Hufbeschlag gelöst, der die Merkmale im Kennzeichen des Anspruchs 1 aufweist.

Das Basisteil weist einen massiven Basiskörper ähnlich einem altbekannten Hufeisen auf. Die sowohl in Längsrichtung der Schenkel des Basiskörpers als auch quer dazu versetzte Anordnung der Reihe Nagellöcher und Reihe Ausnehmungen benötigt wenig Platz und gewährleistet eine grosse Stabilität des Basiskörpers. Ein guter Halt der Sohle am Basiskörper ist dadurch ermöglicht, dass an der Sohle angeformte, zapfenartige Vorsprünge in die Ausnehmungen des Basiskörpers eingreifen, in welchen gut geschützt die Befestigungselemente angeordnet sind, die ihrerseits mit den Befestigungsausnehmungen der Vorsprünge zusammenwirken. Da die Sohle aus elastischem Material gefertigt ist, ist zwischen den Vorsprüngen und den Befestigungselementen eine gute kraftschlüssige Verbindung erzielbar. Da der Basiskörper massiv ausgebildet ist, d.h. dass er im wesentlichen einen Vollquerschnitt aufweist, vermitteln die Nagellöcher den Hufnägeln einen guten Halt und eine Führung beim Einschlagen. Der massiv gehaltene Basiskörper weist gute Stabilität auf und ermöglicht trotzdem die Verwendung einer dicken austauschbaren Sohle aus elastischem Material. Die Lebensdauer der Sohle ist somit erheblich. Da sie aus einem elastischen Material mit stoss- und schwingungsdämpfenden Eigenschaften besteht, werden die Belastungen von Gelenken, Sehnen und Bändern wesentlich vermindert. Ueberdies werden auch Schäden am Strassenbelag sowie die Lärmbelastung vermindert und ein sicheres Auf- und Abfussen ermöglicht. Weiter ist der Basiskörper mehrmalig verwendbar und mit herkömmlichen Hufnägeln am Huf befestigbar.

Eine besonders bevorzugte Ausbildungsform des erfindungsgemässen Hufbeschlags ist im Anspruch 2 angegeben. Sie ist einfach herstellbar, ermöglicht eine einfache Montage und Demontage der Sohle und gewährleistet eine gute kraftschlüssige Verbindung.

Eine besonders bevorzugte Ausbildungsform des erfindungsgemässen Hufbeschlags ist im Anspruch 3 angegeben. Zylinderförmige Ausnehmungen benötigen wenig Platz, so dass der Basiskörper eine nur geringe Schwächung des massiven Querschnitts durch die Ausnehmungen erleidet.

Eine besonders sichere Verbindung der Sohle und des Basiskörpers wird bei einer weiteren ebenfalls bevorzugten Ausbildungsform des Hufbeschlags gemäss Anspruch 4 erzielt. Die Nut/Keilverbindung ist in Richtung rechtwinklig zur Anlagefläche wie auch am Ende der Schenkel formschlüssig. Dies vermittelt der Sohle, insbesondere beim Auf- und Abfussen, einen ausgezeichneten Halt.

Bei einer weiteren bevorzugten Ausbildungsform des erfindungsgemässen Hufbeschlags gemäss Anspruch 5 wird der Halt der Sohle am Basiskörper, insbesondere auch beim Ab- und Auffussen zusätzlich vergrössert.

Anspruch 6 definiert eine bevorzugte Ausbildungsform des erfindungsgemässen Hufbeschlags, bei welcher die Abnutzung der Sohle, insbesondere durch das Abfussen, verringert und die Stabilität der Sohle im Zehenbereich vergrössert ist.

Vorzugsweise wird eine formschlüssige Verbindung vorne mittig des Hufbeschlags zwischen der Sohle und dem Basiskörper durch hakenartigen Eingriff erzielt, was der Sohle einen ausserordentlich festen Sitz vermittelt.

In besonders bevorzugter Weise sind die Befestigungsbolzen durch lotfreies Schweissen, insbesondere durch Lichtbogenpressschweissen, am Basiskörper befestigt. Dadurch kann der Basiskörper zum Aufrichten bis zum Glühen erwärmt werden, ohne dass die Befestigungsbolzen ihren Halt verlieren.

Der hintere freie Endbereich der Sohle wird insbesondere beim Auffussen stark beansprucht. Eine Ausbildungsform des Hufbeschlags gemäss Anspruch 8 stabilisiert die Sohle in diesem Bereich erheblich.

Der Anspruch 9 definiert eine weitere, besonders bevorzugte Ausbildungsform des erfindungsgemässen Hufbeschlags mit einem schlagdämpfenden Stolleneinsatz. Diese ermöglichen den Hufbeschlag mit wenig Aufwand an die jeweilige Bodenbeschaffenheit anzupassen. Durch eine elastische Zwischenlage werden selbst Schläge bei der Verwendung von metallenen Stollen gedämpft.

Eine weitere bevorzugte Ausbildungsform gemäss Anspruch 10 hilft die Bildung und das Haften von Schneeklumpen zu vermeiden. Die Schneeschutzeinlage ist auf einfache Weise montier- und demontierbar.

Eine besonders wenig Zeit beanspruchende Herstellung ist durch einen besonders bevorzugten erfindungsgemässen Hufbeschlag gemäss Anspruch 11 gewährleistet.

Eine Ausbildungsform des erfindungsgemässen Hufbeschlags gemäss Anspruch 12 verhindert das ungewollte Eindringen von Fremdkörpern zwischen dem Basiskörper und der Sohle. Ueberdies wird der Sohle ein zusätzlicher Halt in Richtung quer zur Längsrichtung der Schenkel vermittelt.

Die vorliegende Erfindung wird nun anhand der Zeichnung näher erläutert, wobei die Figuren 23-30 Details der Erfindung zeigen. Es zeigen rein schematisch:
- Fig. 1: ein Basisteil eines erfindungsgemässen Hufbeschlags von unten;
- Fig. 2: in Seitenansicht das in der Fig. 1 gezeigte Basisteil;
- Fig. 3 bis 8: Schnitte durch das in den Fig. 1 und 2 gezeigte Basisteil entlang den Linien III-III bis VIII-VIII der Fig. 1;
- Fig. 9: in Draufsicht eine erste Ausbildungsform einer Sohle eines erfindungsgemässen Hufbeschlags;
- Fig. 10 und 11: einen erfindungsgemässen Hufbeschlag von unten bzw. in Seitenansicht, mit einem Basisteil gemäss den Fig. 1 bis 8 und einer daran befestigten Sohle gemäss Fig. 9;
- Fig. 12: einen Schnitt durch die in der Fig. 9 gezeigte Sohle entlang der Linie XII-XII;
- Fig. 13 und 14: in Ansicht und Draufsicht ein Verstärkungsorgan für die Sohle;
- Fig. 15 bis 18: Schnitte durch den in den Fig. 10 und 11 gezeigten Hufbeschlag entlang den Linien XV-XV bis XVIII-XVIII der Fig. 10, wobei die Sohle untenliegend und das Basisteil obenliegend gezeigt sind;
- Fig. 19 und 20: in Seitenansicht bzw. von unten, einen Einsatz für die Sohle im vorderen Bereich;
- Fig. 21: in Draufsicht eine zweite Ausbildungsform der Sohle des erfindungsgemässen Hufbeschlags;
- Fig. 22: die in der Fig. 21 gezeigte Sohle von unten montiert an einen Basiskörper gemäss den Fig. 1 bis 8;
- Fig. 23: den Hufbeschlag gemäss Fig. 22 mit einem Stolleneinsatz in einem Schnitt entlang der Linie XXIII-XXIII, wobei die Sohle untenliegend und das Basisteil obenliegend gezeigt sind;
- Fig. 24 bis 26: in Ansicht, Seitenansicht und Grundriss eine Gewindehülse mit einer daran angeformten Keilplatte des in der Fig. 23 gezeigten Stolleneinsatzes;
- Fig. 27: in Ansicht eine elastische Zwischenlage des Stolleneinsatzes;
- Fig. 28: einen Längsschnitt durch die in den Fig. 24 bis 26 gezeigte Gewindehülse mit einer darin eingesetzten Zwischenlage gemäss Fig. 27;
- Fig. 29: eine Schneeschutzeinlage von oben und teilweise geschnitten; und
- Fig. 30: einen Schnitt durch die Schneeschutzeinlage gemäss Fig. 29 entlang der Linie XXX-XXX.

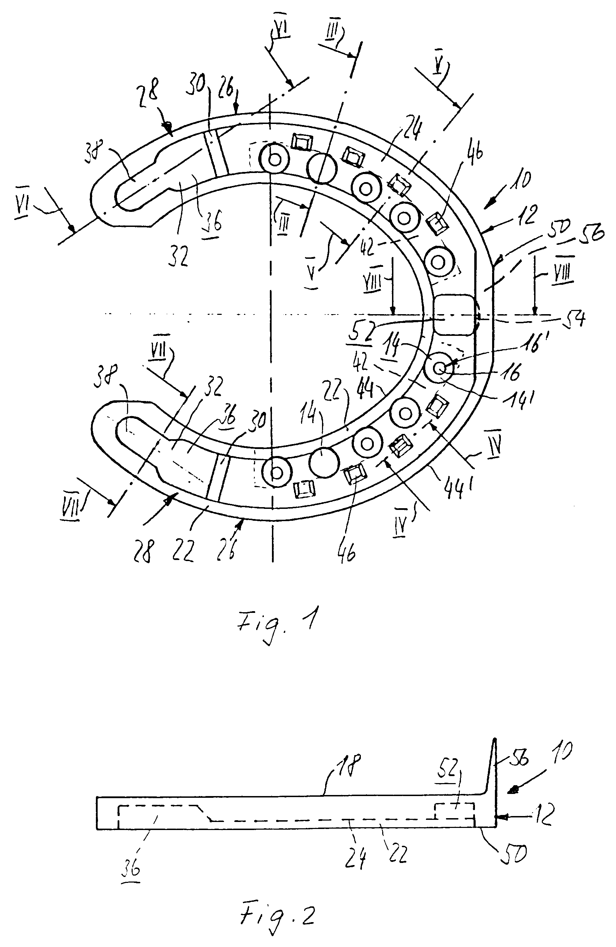

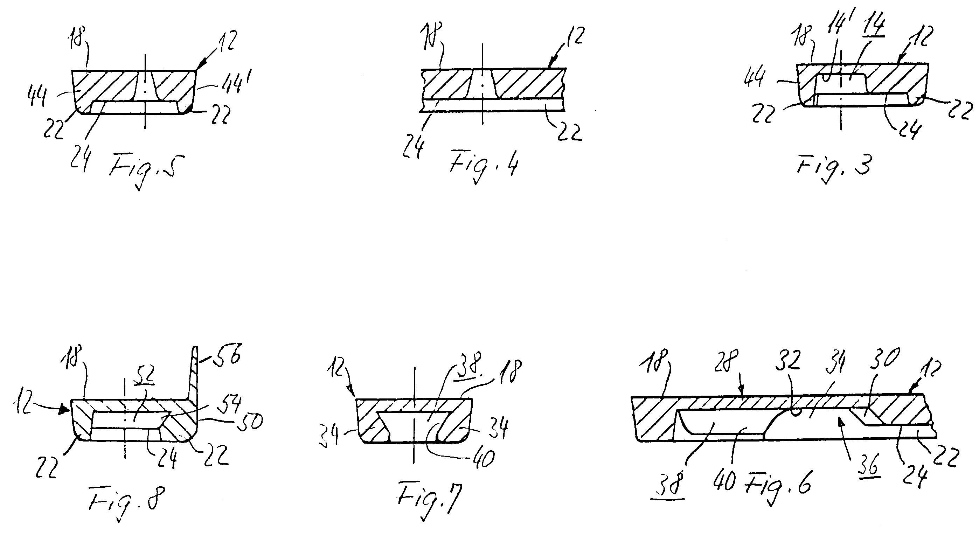

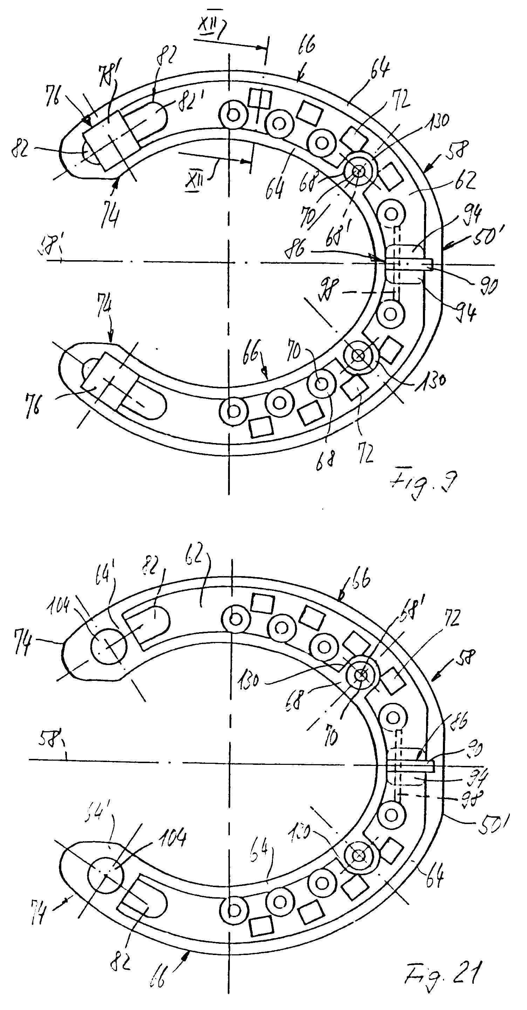

Der erfindungsgemäss Hufbeschlag weist ein in den Fig. 1 und 2 gezeigtes Basisteil 10 auf. Dieses besteht aus einem hufeisenförmigen massiven Basiskörper 12 und in Ausnehmungen 14 des Basiskörpers 12 angeordneten, Befestigungselemente 16' bildenden Befestigungsbolzen 16.

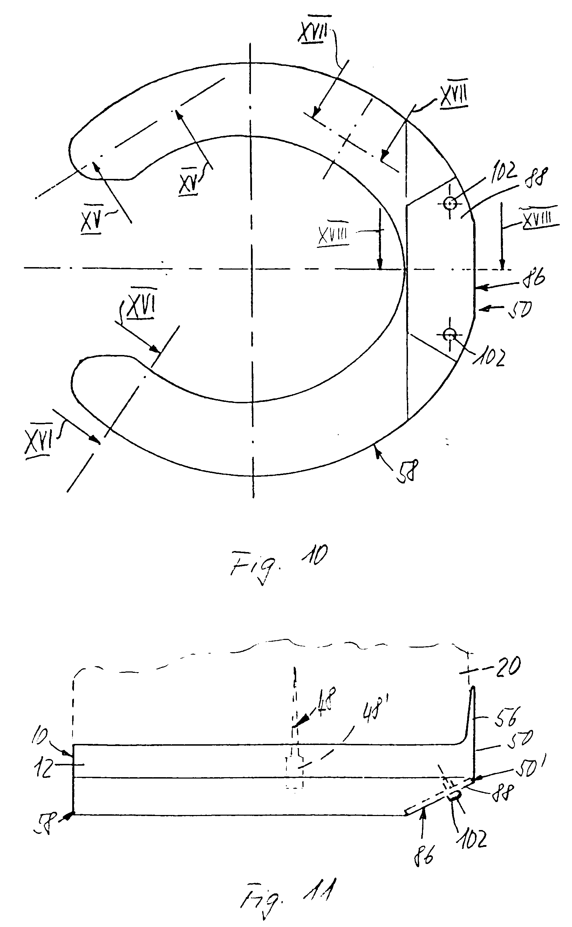

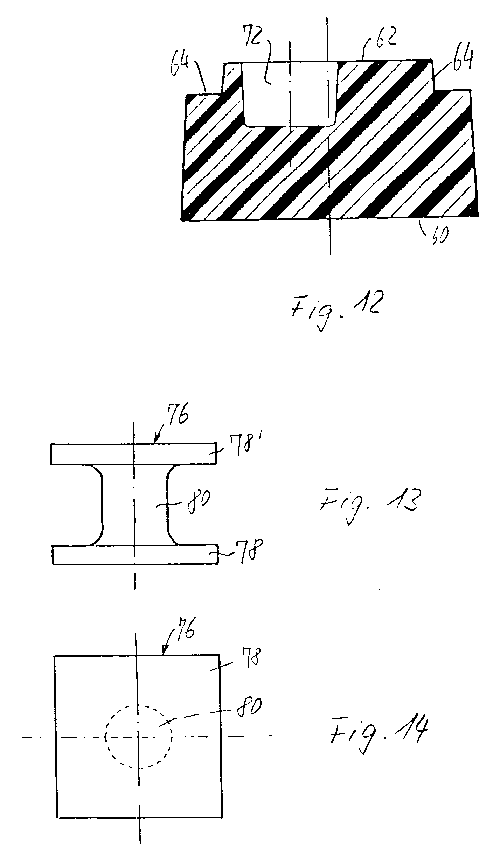

Wie aus den Fig. 1 bis 8 erkennbar, weist der hufeisenförmige Basiskörper 12 aus Metall, in bevorzugter Weise aus Eisen, auf der Oberseite eine im wesentlichen ebene Anlagefläche 18 auf, die dazu bestimmt ist, am Huf 20 eines Pferdes anzuliegen (siehe Fig. 11). Der Querschnitt des Basiskörpers 12 ist im wesentlichen rechteckig oder trapezförmig, wobei ein umlaufender Randwulst 22 vorgesehen ist, der über eine parallel zur Anlagefläche 18 verlaufende, im wesentlichen ebene Basisfläche 24 vorsteht. In bevorzugter Weise beträgt die Dicke des Basiskörpers gemessen in Richtung rechtwinklig zur Anlagefläche 18 von dieser bis zur Basisfläche 24 ca. 6 mm, wobei der Randwulst 22 1 mm bis 3 mm, vorzugsweise etwa 2,5 mm über die Basisfläche 24 vorsteht. Die Basisfläche 24 erstreckt sich von vorne Mitte des Basiskörpers 12 über beide Schenkel 26 bis zu jeweils einem Endabschnitt 28 der Schenkel 26, in welchem an die Basisfläche 24 eine schräge Uebergangsfläche 30 anschliesst, an die eine zur Anlagefläche 18 ebenfalls im wesentlichen parallele Endfläche 32 anschliesst.

Wie dies insbesondere die Fig. 6 und 7 zeigen, sind die Endflächen 32 gegenüber der Basisfläche 24 in Richtung gegen die Anlagefläche 18 hin versetzt, so dass die verbleibende Wandstärke des Basiskörpers 12 zwischen den Endflächen 32 und der Anlagefläche 18 vorzugsweise etwa 2,5 mm beträgt. Die Endfläche 32 und die an sie anschliessenden Seitenwände 34 begrenzen eine Endausnehmung 36, deren Breite, rechtwinklig zur Längserstreckung der Schenkel 26 gemessen, etwa mittig zwischen der Uebergangsfläche 30 und dem von dieser abgewandten Ende der Endausnehmung 36 sich absatzartig verjüngt, so dass sie einen im Querschnitt kleineren Fortsatz 38 aufweist. Wie dies insbesondere aus den Fig. 6 und 7 erkennbar ist, sind die Seitenwände 34 im Bereich des Fortsatzes 38 zum Bilden einer im Querschnitt schwalbenschwanzförmigen Nut 40, beispielsweise durch Fräsen hinterschnitten. Diese Nut 40 ist am freien Ende des Fortsatzes 38 geschlossen und in Richtung gegen vorn in den breiteren Bereich der Endausnehmung 36 hin offen.

Die beiden Schenkel 26 weisen je eine Reihe, im vorliegenden Fall je fünf, in Längsrichtung der Schenkel hintereinander angeordnete Ausnehmungen 14 auf, die sich von der Basisfläche 24 her in Richtung gegen die Anlagefläche 18 hin erstrecken und sich in einem Bereich 42 befinden, der sich entlang dem innenliegenden Rand 44 des Basiskörpers 12 erstreckt. Im in den Figuren gezeigten Beispiel sind die im wesentlichen zylinderförmigen oder sich konisch verjüngenden Ausnehmungen 14 ungefähr um die Dicke des Randwulstes 22 vom Rand 44 entfernt. Der Bereich 42 erstreckt sich ungefähr über die Hälfte der Breite des Basiskörpers 12, vergleiche auch Fig. 3, und über etwa zwei Drittel der Länge der Schenkel 26. Der etwa parallel zur Anlagefläche 18 verlaufende Boden der Ausnehnungen 14 ist von jener etwa 2 mm entfernt. Beim in der Fig. 1 gezeigten Beispiel ist in jeweils der hintersten und in den drei vordersten Ausnehmungen 14 je ein Befestigungsbolzen 16 angeordnet. Wie dies insbesondere aus Fig. 17 erkennbar ist, handelt es sich dabei um handelsübliche Gewindeaufschweissbolzen aus Stahl, die verkupfert sind und durch Lichtbogenpressschweissen am Basiskörper 12 befestigt sind. Sie stehen über die Ebene der Basisfläche 24 vor, enden aber in Richtung rechtwinklig zur Anlagefläche 18 gesehen vor dem Ende des Randwulstes 22; dies schützt die Befestigungsbolzen 16 vor Beschädigung. Es ist selbstverständlich denkbar in Abhängigkeit von der Belastung, in allen Ausnehmungen 14 Befestigungsbolzen 16 anzuordnen oder sie in anderen Ausnehmungen 14 wegzulassen.

Wie die Fig. 1, 4 und 5 zeigen, weist jeder Schenkel 26 eine Reihe in Längsrichtung der Schenkel 26 hintereinander angeordneter Nagellöcher 46 auf, im vorliegenden Fall vier, die jeweils in Längsrichtung der Schenkel 26 gesehen zwischen benachbarten Ausnehmungen 14 und bezüglich diesen in Richtung zum aussenliegenden Rand 44' hin versetzt angeordnet sind. Vorzugsweise schliessen die Nagellöcher 46 in Richtung rechtwinklig zur Längsrichtung der Schenkel 26 gesehen, unmittelbar an den Bereich 42 an. Die Nagellöcher 46 bilden vorzugsweise kegelstumpfförmige Durchgänge durch den Basiskörper 12, so dass zum Befestigen des Basiskörpers 12 am Huf 20 handelsübliche E- oder IC-Hufnägel 48 verwendet werden können (siehe auch Fig. 11).

Schlussendlich weist der Basiskörper 12 im vorderen Bereich 50, in dem auch die beiden Schenkel 26,26' aneinanderstossen, eine Vertiefung 52 auf, die auch in den Fig. 8 und 18 gezeigt ist. Die Vorderflanke der Vertiefung 52 ist mit einer Hinterschneidung 54 versehen. Weiter können am Basiskörper 12 eine Zehenkappe 56 oder Seitenkappen angeformt sein, wie dies allgemein bei Hufeisen bekannt ist.

Eine hufeisenförmige Sohle 58 aus elastischem, schwingungs- und schlagdämpfendem und vorzugsweise abriebfestem Material, beispielsweise einem Polyurethan, weist, wie dies insbesondere aus den Fig. 12 und 16 erkennbar ist, einen im wesentlichen rechteckigen oder trapezförmigen Querschnitt auf. Die Standfläche ist mit 60 und die dieser gegenüberliegende, dem Basiskörper 12 zugewandte Tragfläche, mit welcher die an das Basisteil 10 montierte Sohle 58 an der Basisfläche 24 anliegt, mit 62 bezeichnet. Entlang dem Rand der Tragfläche 62 ist an der Sohle 58 eine Kantenaussparung 64 vorhanden, in die bei montierter Sohle 58 der Randwulst 22 eingreift.

Ueber die Tragfläche 62 steht in jedem Schenkel 66 der Sohle 58 eine Reihe zapfenartiger Vorsprünge 68 vor, die dazu bestimmt sind, bei montierter Sohle 58 in die entsprechenden Ausnehmungen 14 im Basiskörper 12 einzugreifen. Die Vorsprünge sind im wesentlichen zylinderförmig, gegebenenfalls gegen das freie Ende hin konisch verjüngend ausgebildet, wie dies insbesondere aus der Fig. 17 erkennbar ist. Jeder Vorsprung 68 weist eine zu seiner Achse 68' koaxiale Befestigungsausnehmung 70 auf, deren Durchmesser kleiner ist als der Durchmesser der Befestigungsbolzen 16. Sind diese als Gewindebolzen ausgebildet, entspricht der Durchmesser der Befestigungsausnehmung 70 vorzugsweise etwa dem Kerndurchmesser der Befestigungsbolzen. Dadurch wird ein guter Kraftschluss zwischen diesen und der Sohle 58 erreicht.

Weiter ist an jedem Schenkel 66 der Sohle 58 eine Reihe von Nagelkopfaussparungen 72 vorhanden, die den Nagellöchern 46 im Basiskörper 12 entsprechend angeordnet sind, um die über die Basisfläche 24 vorstehenden Teile der Köpfe 48' der Hufnägel 48 aufzunehmen und zu umschliessen.

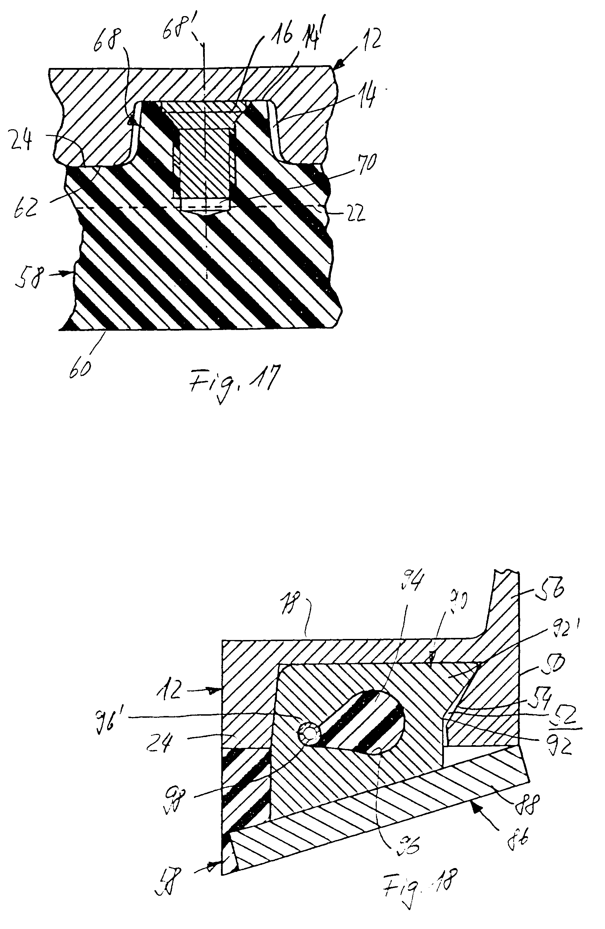

In den freien Endbereichen 74 der Schenkel 66 ist in der Sohle 58 je ein Verstärkungsorgan 76 eingebettet, wie dies insbesondere die Fig. 13 bis 16 zeigen. Jedes Verstärkungsorgan 76 weist zwei parallele, vorzugsweise quadratische Platten 78 auf, die über einen zentralen Schaftteil 80 miteinander verbunden sind. Die untere Platte 78 ist im Körper der Sohle 58 eingebettet, während die obere Platte 78' oberhalb der Tragfläche 62 angeordnet ist. Der über dem Körper der Sohle 58 vorstehende Abschnitt des Schaftteils 80 ist in einem keilartigen Vorsprung 82 der Sohle 58 eingebettet, dessen Breite quer zur Längsrichtung des jeweiligen Schenkels 66 gesehen, schmäler ist als die Platte 78, dessen obere Fläche 82' mit der oberen Fläche der Platte 78' fluchtet und der sich in Längsrichtung des jeweiligen Schenkels 66 in Richtung gegen dessen freieres Ende geringfügig und in Richtung gegen vorne weiter über die obere Platte 78' hinaus erstreckt; die gesamte Länge des keilartigen Vorsprungs 82 entspricht etwa der Länge der Endfläche 32 im Basiskörper 12. Die Platte 78' dient als mit der Nut 40 zusammenwirkender Teil einer Nut/Keilverbindung 84 der Sohle 58 mit dem Basisteil 10. Der Vollständigkeit halber sei erwähnt, dass die obere Fläche 82' in etwa über denselben Betrag oberhalb der Tragfläche 62 angeordnet ist wie die Endfläche 32 des Basiskörpers 12 gegenüber der Basisfläche 24 versetzt ist.

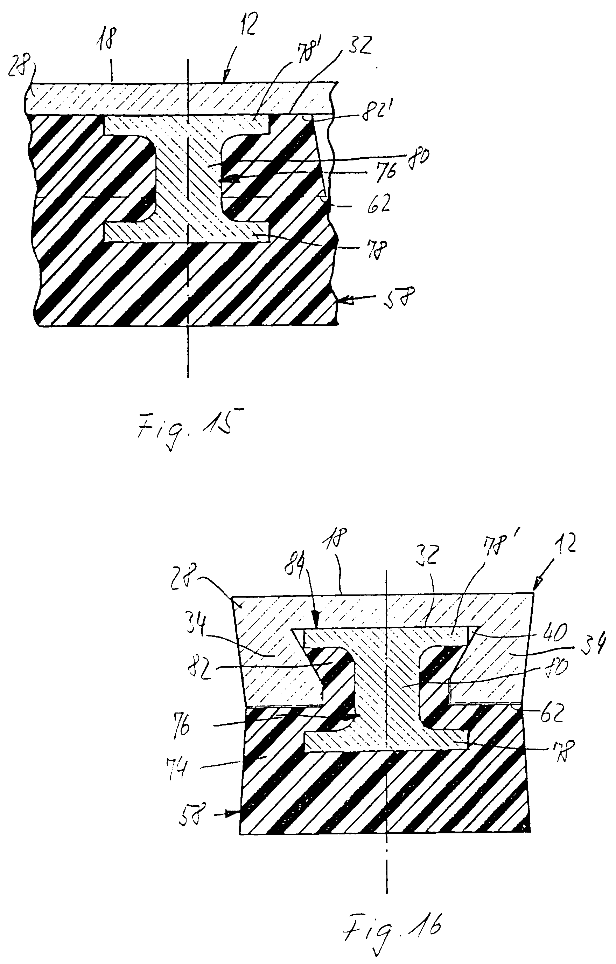

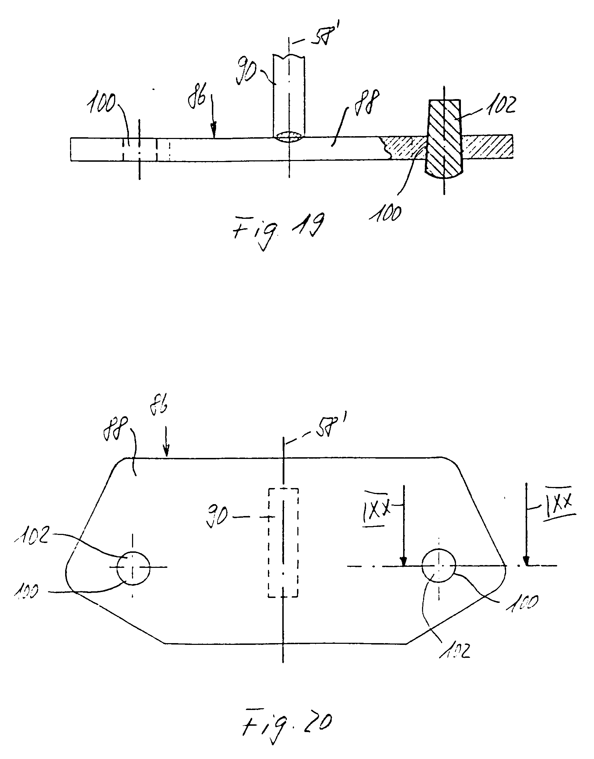

Wie dies auch die Fig. 10, 11 und 18 zeigen, ist in der Sohle 58 im vorderen Bereich 50' ein plattenartiger Einsatz 86 aus hartem Material, beispielsweise Manganstahl, eingebettet. Dieser in den Fig. 19 und 20 vergrössert gezeigte Einsatz 86 weist eine Trittplatte 88 auf, von der mittig ein Haltefortsatz 90 absteht, der an seiner Vorderflanke eine Hinterschneidung 92 aufweist. Die so gebildete Haltenase 92' ist dazu bestimmt, bei an dem Basiskörper 12 montierter Sohle 58 in die Hinterschneidung 54 in der Vertiefung 52 des Basiskörpers 12 einzugreifen, um eine hakenartige Verbindung zu bilden. Der Haltefortsatz 90 steht über die Tragfläche 62 vor und ist in ein etwa der Form der Vertiefung 52 angepasstes, an der Sohle 58 angeformtes Eingriffselement 94 eingebettet und steht mit der Haltenase 92' über dieses vor. Der ebenfalls plattenartige, am Einsatz beispielsweise angeschweisste Haltefortsatz 90 weist etwa mittig einen im Querschnitt tropfenförmigen Durchgang 96 auf, an dessen zugespitztem Ende eine zylinderförmige Erweiterung 96' angeformt ist, in die ein Schwerspannstift 98 eingesetzt ist. Der vom Material der Sohle 58 durchgriffene Durchgang 96 sowie der Schwerspannstift 98 dienen zur äusserst stabilen Befestigung der Trittplatte 88 an der Sohle 58.

Die Trittplatte 88 weist weiter zwei zur Längsmittelebene 58' der Sohle 58 symmetrisch angeordnete Löcher 100 auf, in die handelsübliche Stifte 102 eingesetzt sind, die mit ihrem Kopf gegen unten über die Trittplatte 88 vorstehen und die andernends in etwa bei der Tragfläche 62 enden. Dadurch sind bei montierter Sohle 58 die Stifte 102 am Basiskörper 12 abgestützt. Ueberdies sind sie, falls erwünscht, durch Herausschlagen problemlos entfernbar. Schlussendlich ist zu beachten, dass die Trittplatte 88 in Richtung gegen vorne ansteigend angeordnet ist, so dass ein anatomisch richtiges Abrollen am Boden gewährleistet ist.

Die Sohle 58 wird wie folgt an den Basiskörper 12 montiert. Zuerst wird mit dem keilartigen Vorsprung 82 und der Platte 78' voraus in die Endausnehmung 36 eingefahren und die Sohle 58 bezüglich den Basisteil 10 in Richtung gegen hinten verschoben, bis die als Keil wirkende Platte 78' mindestens teilweise in die Nut 40 eingefanren ist. Dann wird unter Verbiegen der Sohle 58 das Eingriffelement 94 mit der Vertiefung 52 in Eingriff gebracht, wobei der Haltefortsatz 90 in die Hinterschneidung 54 hakenartig eingreift. Beim nachfolgenden Andrücken der Schenkel 66 der Sohle 58 an den Basiskörper 12 werden nun die Platten 78' vollständig in die Nuten 40 hineingeschoben und die Vorsprünge 68 der Sohle 58 in die Ausnehmungen des Basiskörpers 12 eingesetzt. Dabei kommen die Befestigungsbolzen 16 in Eingriff mit den Befestigungsausnehmungen 70, um eine gute kraftschlüssige Haltewirkung zu erzielen.

Eine zusätzliche formschlüssige Haltewirkung in Richtung rechtwinklig zur Anlagefläche 18 wird durch die Nut/Keilverbindung 84 und den hakenartigen Eingriff des Einsatzes 86 mit der Hinterschneidung 54 im Basiskörper 12 erzielt. Das Lösen dieses hakenartigen Eingriffs ist zusätzlich dadurch verhindert, dass die Länge des Haltefortsatzes 90 in Richtung der Längsmitte 58' gesehen, auf die Vertiefung 52 abgestimmt ist und dieser im wesentlichen entspricht. Weiter liegt bei montierter Sohle 58 der nach hinten über die Platte 78' vorstehende Teil des keilartigen Vorsprungs 82 am Ende des Fortsatzes 38 an.

Zur Demontage der Sohle 58 wird mit einem Werkzeug, beispielsweise einem Schraubendreher oder einer Zange im Mittelbereich der Schenkel 26 zwischen die Sohle 58 und das Basisteil 10 eingefahren und die Sohle 58 unter Verbiegen vom Basisteil 10 abgehoben. Dadurch wird die kraftschlüssige Verbindung zwischen den Vorsprüngen 68 und dem Befestigungsbolzen 16 gelöst. Durch das Verformen der Sohle 58 wird auch der Haltefortsatz 90 aus der Vertiefung 52 ausgeschwenkt, so dass das Eingriffselement 94 aus der Vertiefung 52 herausgenommen werden kann. Anschliessend kann durch nach Vorneverschieben der Sohle 58 die Nut/Keilverbindung 84 mit den beiden Schenkeln 26 gelöst werden.

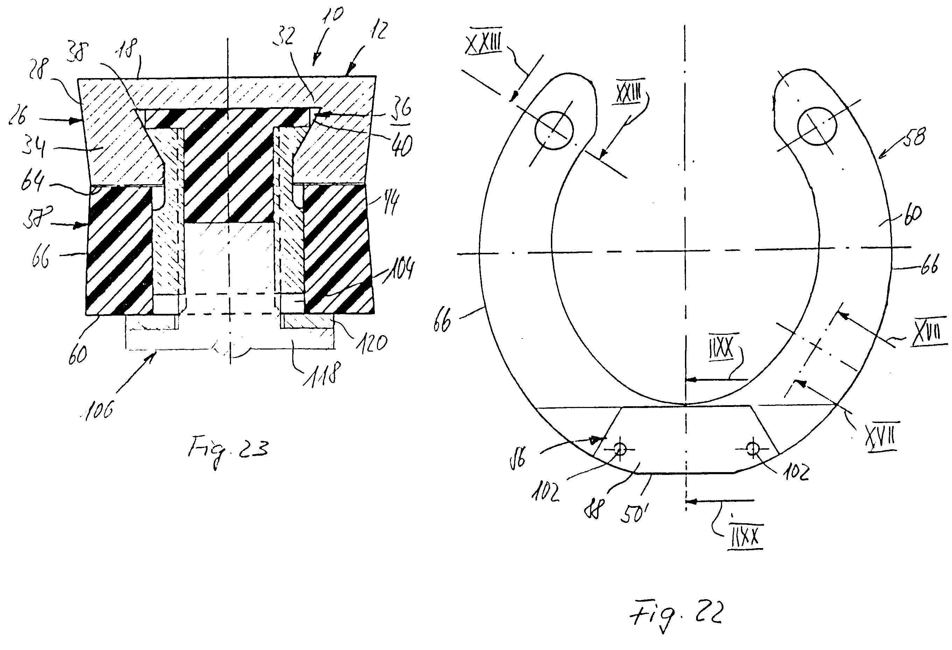

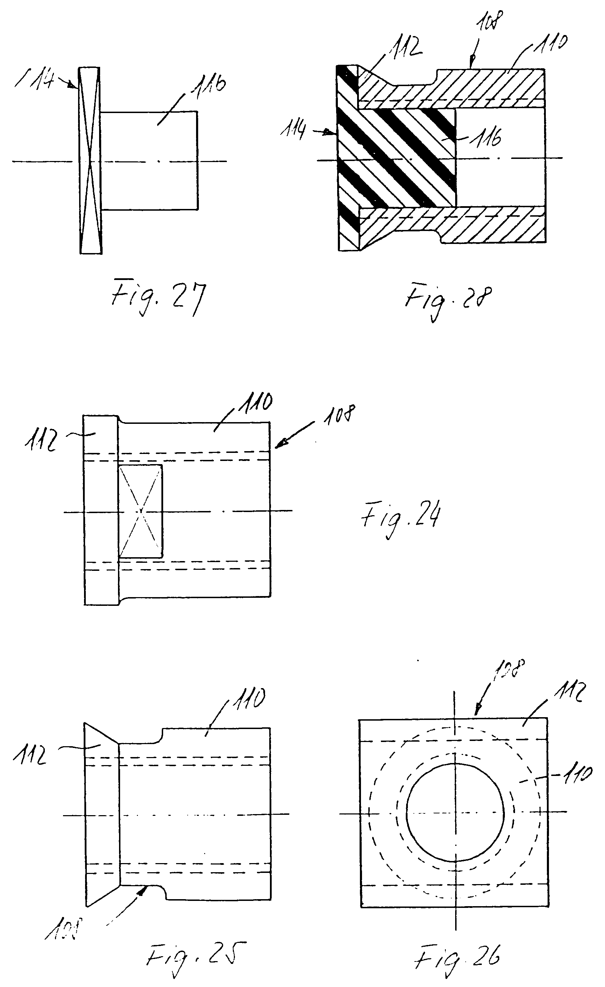

Bei der in den Fig. 21 bis 28 gezeigten Ausbildungsform des erfindungsgemässen Hufbeschlags ist das Basisteil 10 genau gleich ausgebildet wie weiter oben beschrieben und in den Fig. 1 bis 8 gezeigt. Mit Ausnahme der Ausbildung in den Endabschnitten 28 der beiden Schenkel 66 ist auch die Sohle 58 gleich ausgebildet wie in den Fig. 9, 12 und 17 bis 20 gezeigt und weiter oben beschrieben. Beim Ausführungsbeispiel gemäss den Fig. 21 bis 28 werden für gleiche Teile dieselben Bezugszeichen benützt wie bei der weiter oben beschriebenen Ausführungsform.

Dort wo bei der Ausbildungsform gemäss Fig. 9 das Verstärkungsorgan 76 angeordnet ist, weist die Sohle 58 bei der Ausbildungsform gemäss Fig. 21 bis 28 ein Durchgangsloch 104 auf. Ueber die Tragfläche 62 steht im Endbereich 74 ebenfalls ein keilartiger Vorsprung 82 vor. Dieser endet zusammen mit der Tragfläche 62 aber in einem Abstand vor dem Durchgangsloch 104, wobei die Kantenaussparung 64 am Ende der Schenkel 66 Endaussparungen 64' bildet.

Wie aus der Fig. 23 hervorgeht, ist in das Durchgangsloch 104 ein Stolleneinsatz 106 einsetzbar. Dieser weist eine Gewindehülse 108 auf, die in den Fig. 24 bis 26 im Detail gezeigt ist. Sie weist einen im wesentlichen zylinderförmigen Schaftabschnitt 110 auf, an den einerends eine Keilplatte 112 angeformt ist. Auf die Keilplatte 112 ist eine plattenartige Zwischenlage 114 auflegbar, die zum Befestigen an der Gewindehülse 108 einen zylinderförmigen Befestigungsstummel 116 aufweist, der bei montierter Zwischenlage 114 in den Durchgang der Gewindehülse 108 eingreift.

Wie Fig. 23 zeigt, ist in die Gewindehülse 108, von der der Keilplatte 112 abgewandten Seite her ein Stollen 118 einschraubbar, der sich über eine Unterlagsscheibe 120 an der Standfläche 60 der Sohle 58 abstützt. Durch Anziehen des Stollens 118 bis zu einem bestimmten Drehmoment baut er mit der Gewindehülse 108 in der Sohle 58 eine Vorspannung auf.

Bei der Montage des Stolleneinsatzes 106 kann wie folgt vorgegangen werden. Zuerst wird die Zwischenlage 114 der Gewindehülse 108 aufgesetzt. Dann wird letztere von der dem Basisteil 10 zugewandten Seite her in das Durchgangsloch 104 der Sohle 58 eingesetzt. Anschliessend wird von der anderen Seite her der Stollen 118, mit der Unterlagsscheibe 120, in die Gewindehülse 108 eingeschraubt, aber noch nicht festgezogen. Nun kann die Sohle 58 zusammen mit dem Stolleneinsatz 106, wie beim weiter oben beschriebenen Ausführungsbeispiel, an das Basisteil 10 montiert werden, indem mit der Keilplatte 112 in die Nut 40 eingefahren und dann das Eingriffselement 94 in die Vertiefung 52 im vorderen Bereich 50 des Basisteils 10 eingesetzt wird. Durch Pressen der Schenkel 66 gegen das Basisteil 10 kommen dann die Befestigungsbolzen 16 mit den Befestigungsausnehmungen 70 in den Vorsprüngen 68 in Eingriff. Schlussendlich werden dann noch die Stollen 118 an der Gewindehülse 108 festgeschraubt, wobei die in der Nut 40 geführte Keilplatte 112 ein Mitdrehen der Gewindehülse 108 verhindert, und eine Vorspannung in der Sohle 58 und in der Zwischenlage 114 aufgebaut. Letztere wird durch den am Befestigungsstummel 116 stirnseitig anliegenden Stollen 118 gegen den Basiskörper 12 gepresst. Das Auswechseln der Stollen 118 kann auf einfache Weise bei an das Basisteil 10 montierter Sohle 58 erfolgen, indem der auszuwechselnde Stollen 118 herausgedreht und der Ersatzstollen in die Gewindehülse 108 eingedreht wird.

Die Montage der Sohle 58 kann auch erfolgen, indem zuerst die Gewindehülse 108 mit der aufgesetzten Zwischenlage 114 in die Nut 40 eingesetzt wird. Dann wird das Eingriffselement 94 mit der Vertiefung 52 in Eingriff gebracht und wird die Sohle 58 durch Verschwenken um eine rechtwinklig zur Längsmitte 58' verlaufende Achse an das Basisteil 10 angelegt, wobei die Befestigungsbolzen 16 mit den Befestigungsausnehmungen 70 in Eingriff gelangen und die Endbereiche 74 über den Schaftabschnitt 110 der Gewindehülse 108 geschoben wird. Als letztes wird dann der gewünschte Stollen 118, unter Zwischenlegen der Unterlagsscheibe 120 in die Gewindehülse 108 eingedreht und angezogen.

Die Zwischenlage 114 zwischen der Gewindehülse 108 und dem Basiskörper 12 sowie die vorgespannte Sohle 58 dämpft die beim Auffussen auf die Stollen 118 einwirkenden Schläge und Schwingungen.

Das Basisteil 10 und die Sohle 58 sind mittels unter Verbiegen der elastischen Sohle 58 ineinander ein- und ausfahrbaren, in Richtung quer zum Basisteil 10 formschlüssigen Befestigungsmitteln im vorderen Bereich 50,50' und in den hinteren Endbereichen 74 bzw. Endabschnitten 28 miteinander verbunden. Um bei montierter Sohle 58 ein Ausfahren dieser Befestigungsmittel zu verhindern, sind in den Schenkeln 26,66 kraftschlüssige Befestigungsmittel 16,70 vorhanden, die die Sohle 58 in Anlage am Basisteil 10 halten. Im massiven Basiskörper 12 sind jeweils Vertiefungen 36,52 und Ausnehmungen 14 für die Aufnahme der Befestigungsmittel vorhanden.

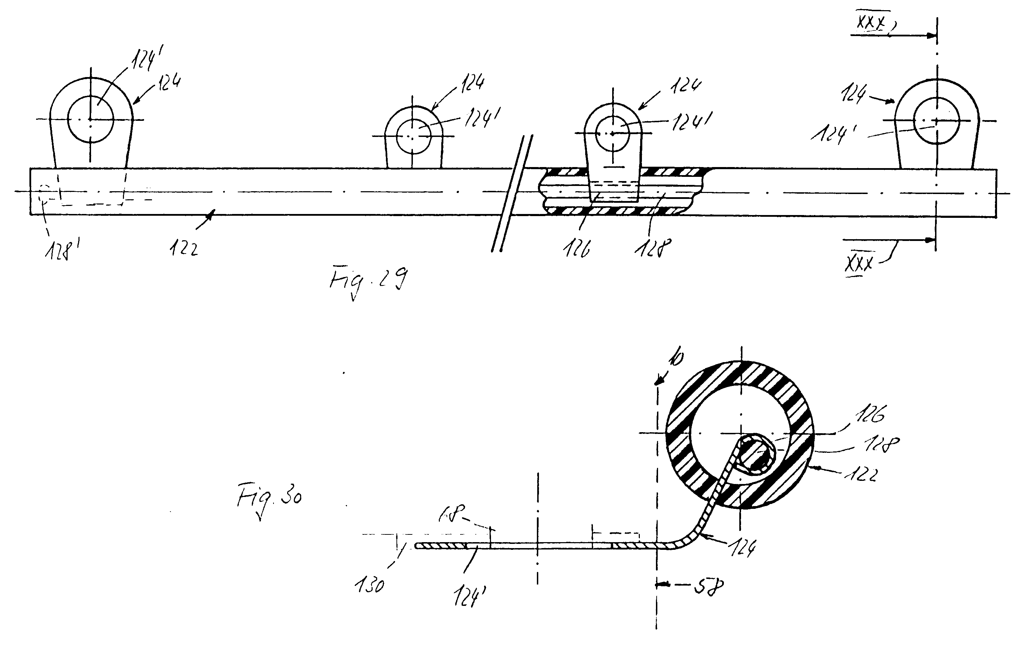

Stollen 118 werden im Springsport eingesetzt und insbesondere auch sonst im Winter verwendet, um ein Ausrutschen auf Schnee und Eis zu verhindern. Nun besteht gerade dann die Gefahr, dass sich Schneeklumpen bilden und am Hufbeschlag insbesondere im von diesem umgriffenen Raum unter dem Huf respektive an der Hufsohle festsetzen. Um dies zu vermeiden, kann an den Hufbeschlag, wie er in den Fig. 1 bis 8 und 21 bis 28 gezeigt ist, eine schlauchartige flexible Schneeschutzeinlage 122 montiert werden (Fig. 29 und 30). Aus rostfreiem Federstahlblech gefertigte Befestigungsösen 124 durchdringen die Wand der Schneeschutzeinlage 122 und sind an ihrem im Innern der Schneeschutzeinlage 122 angeordneten Ende zu einer Tülle 126 gebogen. Diese ist von einer Seele 128 aus Kunststoff durchgriffen, die an beiden Enden 128' aufgeweitet ist, um ein Herausgleiten zu verhindern. An dem aus der Schneeschutzeinlage 122 zungenartig herausragenden Teil weisen die Befestigungsösen 124 je ein Oesenloch 124' auf.

Für die Montage der Schneeschutzeinlage 122 am Hufbeschlag wird zuerst die Sohle 58 vom Basisteil 10 getrennt. Dann wird die Schneeschutzeinlage 122 derart entlang dem innen liegenden Rand der Sohle 58 angeordnet, dass sie bei montierter Sohle 58 entlang dem innenliegenden Rand 44 des Basisteils 10 verläuft, und werden die beiden mittleren Befestigungsösen 124 auf je den zweitvordersten Vorsprung 68 der beiden Reihen Vorsprünge der Sohle 58 aufgeschoben, so dass der betreffende Vorsprung das Oesenloch 124' der betreffenden Befestigungsöse 124 durchgreift, wie dies in Fig. 30 gestrichelt angedeutet ist. Die Kantenaussparung 64 ist in Form einer den betreffenden Vorsprung 68 umgreifenden Befestigungsnut 130 weiter gezogen (siehe Fig. 9 und 21), in welche der den Vorsprung 68 umgreifende Teil der Befestigungsöse 124 zu liegen kommt. Dadurch ist sichergestellt, dass die Sohle 58 mit ihrer Tragfläche 62 an der Basisfläche 24 auch bei montierter Schneeschutzeinlage 122 direkt anliegt. Anschliessend wird mit dem Schaftabschnitt 110 der beiden Gewindehülsen 108 in die Oesenlöcher 124' der beiden aussenliegenden Befestigungsösen 124 eingefahren und der Stolleneinsatz 106, wie weiter oben beschrieben, an die Sohle 58 montiert. Diese kann nun zusammen mit der Schneeschutzeinlage 122 in gleicher Art und Weise wie weiter oben beschrieben, an das Basisteil 10 montiert werden.

In vorteilhafter Weise wird die Sohle 58 durch Giessen hergestellt. Die Verstärkungsorgane 76 und der Einsatz 86 werden dabei, falls sie überhaupt benötigt werden, in das Giesswerkzeug eingelegt und bei der Herstellung der Sohle 58 umgossen.

Es ist denkbar, die Nut/Keilverbindung 48 durch eine andere geeignete Verbindungsanordnung zu ersetzen.

Es ist auch denkbar, die Befestigungsmittel im Bereich der Vertiefung 52 und den Haltefortsatz 90 andersartig auszubilden.

Es ist auch möglich, auf den Randwulst 22 und die Kantenaussparung 64 zu verzichten.

In bevorzugter Weise wird der Basiskörper 12 durch Gesenkschmieden hergestellt. Dabei werden auch die Reihen Ausnehmungen 14 und Aussparungen für die Reihen Nagellöcher 46, die Endausnehmungen 36, die Vertiefung 52 und der Randwulst 22 geformt. Als Nachbearbeitung ist dann nur noch das Ausnehmen, beispielsweise durch Fräsen, der Nut 40 und der Hinterschneidung 54 sowie das Fertigstellen der Nagellöcher 46, beispielsweise durch Kaltprägen, notwendig. Zur Fertigstellung des Basisteils 10 werden dann in den Ausnehmungen 14 des monoblockartigen Basiskörpers 12 die Befestigungsbolzen 16 an diesen angeschweisst.

## Patentansprüche

1. Hufbeschlag mit einem metallenen, zum Befestigen am Huf (20) eines Pferdes mittels Hufnägeln (48) und mit einer Anlagefläche (18) am Huf (20) anzuliegen bestimmten Basisteil (10), das auf seiner der Anlagefläche (18) abgewandten Unterseite wenigstens eine Ausnehmung (14) und in jedem seiner zwei Schenkel (26) eine Reihe in Längsrichtung der Schenkel (26) hintereinander angeordneter Nagellöcher (46) sowie Befestigungselemente (16') aufweist, und einer auswechselbaren Sohle (58) aus elastischem Material, die mindestens einen zum Eingreifen in die Ausnehmung (14) bestimmten Vorsprung (68) und zum Zusammenwirken mit den Befestigungselementen (16') bestimmte Befestigungsausnehmungen (70) aufweist, dadurch gekennzeichnet, dass das Basisteil (10) einen massiven Basiskörper (12) und jeder Schenkel (26) des Basiskörpers (12) auf der Unterseite in einem entlang dem innenliegenden Rand (44) sich erstreckenden Bereich (42) eine Reihe, in Längsrichtung des Schenkels (26) hintereinander angeordneter Ausnehmungen (14) aufweist, dass Nagellöcher (46) in Längsrichtung des jeweiligen Schenkels (26) zwischen benachbarten Ausnehmungen (14) und bezüglich diesen in Richtung gegen den aussenliegenden Rand (44') hin versetzt angeordnet sind, und dass die Befestigungselemente (16') in Ausnehmungen (14) angeordnet sind und die Sohle (58), in die Ausnehmungen (14) einsetzbare, zapfenartige Vorsprünge (68) mit den Befestigungsausnehmungen (70) aufweist.

2. Hufbeschlag nach Anspruch 1, dadurch gekennzeichnet, dass die Befestigungselemente (16') von den Böden (14') der Ausnehmungen (14) abstehende Befestigungsbolzen (16) aufweisen, die dazu bestimmt sind, in im wesentlichen zylinderförmige Befestigungsausnehmungen (70) in den Vorsprüngen (68) einzugreifen.

3. Hufbeschlag nach Anspruch 1 oder 2, dadurch gekennzeichnet, dass die Ausnehmungen (14) und die Vorsprünge (68) wenigstens annähernd zylinderförmig oder konisch ausgebildet sind.

4. Hufbeschlag nach einem der Ansprüche 1 bis 3, dadurch gekennzeichnet, dass die freien Endabschnitte (28,74) des Basiskörpers (12) und der Sohle (58) mittels einer, am Ende der Schenkel (26) verschlossenen, schwalbenschwanzförmigen Nut/Keilverbindung (84) miteinander verbindbar sind.

5. Hufbeschlag nach einem der Ansprüche 1 bis 4, dadurch gekennzeichnet,dass der Basiskörper (12) im vorderen Bereich (50) eine Vertiefung (52) aufweist, die dazu bestimmt ist, ein Eingriffelement (94) der Sohle (58) aufzunehmen.

6. Hufbeschlag nach Anspruch 5, dadurch gekennzeichnet, dass in der Sohle (58) im vorderen Bereich (50') ein, vorzugsweise plattenartiger Einsatz (86) aus hartem Material eingebettet ist, der einen in das Eingriffelement (94) hineinragenden Haltefortsatz (90) aufweist, und vorzugsweise der Haltefortsatz (90) und die Vertiefung (52) an ihren Vorderflanken Hinterschneidungen (92,54) zum hakenartigen Ineinandergreifen aufweisen.

7. Hufbeschlag nach einem der Ansprüche 1 bis 6, dadurch gekennzeichnet, dass die Befestigungsbolzen (16) Gewindeaufschweissbolzen sind, die vorzugsweise durch Lichtbogenpressschweissen am Basiskörper (12) befestigt sind.

8. Hufbeschlag nach Anspruch 4, dadurch gekennzeichnet, dass für die Nut/Keilverbidnung (84) der Basiskörper (12) eine in Richtung gegen hinten geschlossene und gegen vorne offene Nut (40) und die Sohle (58) einen Keil (78') aufweist, der vorzugsweise an einem in die Sohle (58) eingebetten Verstärkungsorgan (76) angeordnet ist.

9. Hufbeschlag nach Anspruch 4, dadurch gekennzeichnet, dass für die Nut/Keilverbindung (84) der Basiskörper (12) eine in Richtung gegen hinten geschlossene und gegen vorne offene Nut (40) und die Sohle (58) einen Durchgang (104) aufweist, in den eine Gewindehülse (108) eingreift, in die einerseits ein Stollen (118) einschraubbar ist und die andererseits eine Keilplatte (112) trägt, und zwischen dieser und dem Basiskörper (12) eine elastische Zwischenlage (114) angeordnet ist.

10. Hufbeschlag nach Anspruch 9, gekennzeichnet durch eine schlauchartige, flexible Schneeschutzeinlage (122) mit Befestigungsösen (124), welche die Gewindehülse (108) bzw. einen Vorsprung (68) umgreifend, zwischen die Sohle (58) und den Basiskörper (12) einlegbar sind.

11. Hufbeschlag nach einem der Ansprüche 1 bis 10, dadurch gekennzeichnet, dass der Basiskörper (12) ein durch Gesenkschmieden geformtes Basiseisen ist, an dem durch Gesenkschmieden wenigstens Aussparungen für die Nagellöcher (46), die Ausnehmungen (14) und gegebenenfalls im vorderen Bereich (50) eine Vertiefung (52) und im freien Endbereich (28) der Schenkel (26) eine Endausnehmung (36) für eine Keil/Nutverbindung (84) mit der Sohle (58) angeformt sind, und an das die Befestigungsbolzen (16) befestigt und an dem gegebenenfalls eine Hinterschneidung (54) in der Vertiefung (52) und eine Nut (40) in der Endausnehmung (36) nachgearbeitet sind.

12. Hufbeschlag nach einem der Ansprüche 1 bis 11, dadurch gekennzeichnet, dass der Basiskörper (12) auf der Unterseite einen umlaufenden, vorstehenden Randwulst (22) und die Sohle (58) auf der dem Basisteil (10) zugewandten Seite eine im wesentlichen gegengleiche Kantenaussparung (64) aufweisen, wobei im montierten Zustand der Randwulst (22) in die Kantenaussparung (64) eingreift.

## Claims

1. A horseshoe with a metal base part (10) intended to be fastened to the hoof (20) of a horse by means of horseshoe nails (48) and to be applied to the hoof (20) by means of a bearing surface (18), the said base part (10) having on its under side which is remote from the bearing surface (18) at least one recess (14) and, in each of its two side arms (26), a row of nail holes (46) disposed one after another in the longitudinal direction of the side arms (26) and also fixing elements (16'), and an interchangeable sole (58) of resilient material which has at least one projection (68) intended to engage the recess (14) and fixing recesses (70) intended to co-operate with the fixing elements (16'), characterised in that the base part (10) comprises a solid base member (12) and each side arm (26) of the base member (12) has on the under side, in an area (42) extending along the inner edge (44), a row of recesses (14) disposed one after another in the longitudinal direction of the side arm (26) and in that nail holes (46) are disposed in the longitudinal direction of the respective side arm (26) between adjacent recesses (14) and offset in relation to them in the direction of the outer edge (44') and in that the fixing elements (16') are disposed in recesses (14) and the sole (58) comprises peg-like projections (68) with the fixing recesses (70) and insertable into the recesses (14).

2. A horseshoe according to claim 1, characterised in that the fixing elements (16') comprise, projecting from the bottoms (14') of the recesses (14), fixing bolts (16) which are intended to engage substantially cylindrical fixing recesses (70) in the projections (68).

3. A horseshoe according to claim 1 or 2, characterised in that the recesses (14) and the projections (68) are at least approximately cylindrical or conical in construction.

4. A horseshoe according to one of claims 1 to 3, characterised in that the free end portions (28, 74) of the base member (12) and of the sole (58) can be connected to one another by means of a dovetail-shaped tongue-and-groove connection (84) which is closed at the end of the side arm (26).

5. A horseshoe according to one of claims 1 to 4, characterised in that the base member (12) has in the front portion (50) a depression (52) which is intended to accommodate an engaging element (94) on the sole (58).

6. A horseshoe according to claim 5, characterised in that there is embedded in the sole (58), in the front portion (50'), a preferably plate-like insert (86) of hard material which comprises a retaining extension piece (90) which projects into the engaging element (94) and in that the retaining extension piece (90) and the depression (52) preferably have on their front flanks back tapers (92, 54) for hook-like inter-engagement.

7. A horseshoe according to one of claims 1 to 6, characterised in that the fixing bolts (16) are screw threaded weld-on bolts which are preferably fixed to the base member (12) by arc pressure welding.

8. A horseshoe according to claim 4, characterised in that for the tongue-and-groove connection (84), the base member (12) has, closed in a rearwards direction and open in a forwards direction, a groove (40), the sole (58) comprising a key (78') which is preferably disposed on a reinforcing member (76) embedded in the sole (58).

9. A horseshoe according to claim 4, characterised in that for the tongue-and-groove connection (84), the base member (12) has, closed in a rearwards direction and open towards the front, a groove (40), the sole (58) comprising a through way (104) engaged by a screw threaded sleeve (108) into one end of which it is possible to screw a stud (118) while the other end carries a key plate (112) and in that resilient interlay (114) is disposed between the key plate (112) and the base member (12).

10. A horseshoe according to claim 9, characterised by a tube-like flexible snow guard inlay (122) with fixing lugs (124) which, engaging around the screw threaded sleeve (108) or a projection (68), can be inserted between the sole (58) and the base member (12).

11. A horseshoe according to one of claims 1 to 10, characterised in that the base member (12) is a drop-forged iron base member on which there are, integrally formed by drop-forging, at least recesses for the nail holes (46), the recesses (14) and possibly in the front portion (50) a depression (52) and in the free end portion (28) of the side arms (26) an end recess (36) for a tongue-and-groove connection (84) to the sole (58) and onto which the fixing bolts (16) are fixed and on which a back taper (54) is possibly machined into the depression (52) and a groove (40) is possibly machined in the end recess (36).

12. A horseshoe according to one of claims 1 to 11, characterised in that the base member (12) has on the under side an encircling projecting marginal bead (22) and the sole (58) has on the side facing the base part (10) a substantially diametrically opposed edge recess (64) whereby, in the assembled state, the marginal bead (22) engages the edge recess (64).

## Revendications

1. Ferrure de sabot comprenant une partie de base métallique (10) qui se fixe au sabot (20) d'un cheval au moyen de clous à ferrer (48), s'appuie sur le sabot (20) par une surface d'appui (18) et présente, sur son côte inférieur opposé à la surface d'appui (18), au moins un évidement (14), et dans chacune de ses d eux branches (26), une série de trous à clous (46) placés les uns derrière les autres dans la direction longitudinale des branches (26) ainsi que d'éléments de fixation (16') et une semelle remplaçable (58) en matière élastique qui présente au moins une saillie (68) destinée à s'engager dans l'évidement (14) et des évidements de fixation (70) destinés à coopérer avec les éléments de fixation (16'), caractérisée par le fait que la partie de base (10) présente un corps de base massif (12) et chaque branche (26) du corps de base (12) présente sur le côté inférieur dans une zone (42) s'étendant le long du bord intérieur (44) une série d'évidements (14) placés les uns derrière les autres dans la direction longitudinale de la branche (26), que des trous a clous (46) sont placés dans la direction longitudinale de la branche (26) chacun entre deux évidements (14) voisins et décalés de ceux-ci en direction du bord extérieur (44'), et que les éléments de fixation (16') sont placés dans des évidements (14) et la semelle (58) présente des saillies du genre tenon (68) qui peuvent être engagées dans les évidements (14) et présentent les évidements de fixation (70).

2. Ferrure de sabot selon la revendication 1, caractérisée par le fait que les éléments de fixation (16') présentent des boulons de fixation (16) qui font saillie des fonds (14') des évidements (14) et sont destinés à s'engager dans des évidements de fixation sensiblement cylindriques (70) faits dans les saillies (68).

3. Ferrure de sabot selon l'une des revendications 1 et 2, caractérisée par le fait que les évidements (14) et les saillies (68) sont au moins approximativement cylindriques ou coniques.

4. Ferrure de sabot selon l'une des revendications 1 à 3, caractérisée par le fait que les parties d'extrémité libres (28, 74) du corps de base (12) et de la semelle (58) peuvent être assemblées au moyen d'un assemblage à rainure et coin en forme de queue d'aronde (84) fermé à l'extrémité des branches (26).

5. Ferrure de sabot selon l'une des revendications 1 à 4, caractérisée par le fait que le corps de base (12) présente dans sa partie avant (50) un creux (52) qui est destiné à recevoir un élément d'engagement (94) de la semelle (58).

6. Ferrure de sabot selon la revendication 5, caractérisée par le fait que dans la partie avant (50') de la semelle (58) est encastré un élément rapporté de préférence du genre plaque (86) en matière dure qui présente un appendice de maintien (90) qui entre dans l'élément d'engagement (94), et de préférence, l'appendice de maintien (90) et le creux (52) présentent sur leurs flancs avant des contre-dépouilles (92, 54) pour emboîtement à la manière d'un crochet.

7. Ferrure de sabot selon l'une des revendications 1 à 6, caractérisée par le fait que les boulons de fixation (16) sont des boulons filetés à souder qui sont fixés de préférence par soudage à l'arc par pression au corps de base (12).

8. Ferrure de sabot selon la revendication 4, caractérisée par le fait que pour l'assemblage par rainure et coin (84), le corps de base (12) présente une rainure (40) fermée vers l'arrière et ouverte vers l'avant et la semelle (58) présente un coin (78') qui est placé de préférence sur un organe de renfort (76) encastré dans la semelle (58).

9. Ferrure de sabot selon la revendication 4, caractérisée par le fait que pour l'assemblage par rainure et coin (84), le corps de base (12) présente une rainure (40) fermée vers l'arrière et ouverte vers l'avant et la semelle (58) présente un passage (104) dans lequel s'engage une douille taraudée (108) dans laquelle peut être vissé d'un côté un crampon (118) et qui porte de l'autre côté une plaque à coin (112), et entre celle-ci et le corps de base (12) est placée une couche intermédiaire élastique (114).

10. Ferrure de sabot selon la revendication 9, caractérisée par une garniture souple de protection contre la neige du genre gaine (122) pourvue d'oeillets de fixation (124) qui peuvent être placés entre la semelle (58) et le corps de base (12) de façon à envelopper la douille taraudée (108) ou une saillie (68).

11. Ferrure de sabot selon l'une des revendications 1 à 10, caractérisée par le fait que le corps de base (12) est un fer de base formé par matriçage sur lequel sont formés par matriçage au moins des évidements pour les trous à clous (46), les évidements (14) et éventuellement dans la partie avant (50) un creux (52) et dans la partie d'extrémité libre (28) des branches (26) un évidement d'extrémité (36) pour un assemblage à coin et rainure (84) avec la semelle (58), et auquel sont fixés les boulons de fixation (16) et sur lequel sont éventuellement finies une contre-dépouille (54) dans le creux (52) et une rainure (40) dans l'évidement d'extrémité (36).

12. Ferrure de sabot selon l'une des revendications 1 à 11, caractérisée par le fait que le corps de base (12) présente sur le côté inférieur un bourrelet de bord périphérique saillant (22) et la semelle (58) présente sur le côté dirigé vers la partie de base (10) un évidement d'arête sensiblement complémentaire (64), et à l'état monté, le bourrelet de bord (22) est engagé dans l'évidement d'arête (64).
